# EUROPEAN PATENT APPLICATION

(11) **EP 4 764 287 A1**
(43) Date of publication of application: **24.06.2026**
(21) Application number: 25225527.8
(22) Date of filing: 19.12.2025
(51) Int. Cl.: F16L 37/14

(54) **QUICK CONNECTOR WITH INTEGRATED RFID LATCH VERIFICATION**

(30) Priority: 20.12.2024 US 202463736813 P
(71) Applicant: Cooper-Standard Automotive Inc., Northville, MI 48168 (US)
(72) Inventor: JENSEN, Jacob C., Northville, 48168 (US); FREDERIKSEN, Stephen S., Northville, 48168 (US); CAPUA, Thomas, Northville, 48168 (US)
(74) Representative: Taylor, Gail

(57) **Abstract**

A connector comprising:
a connector body surrounding an internal passage (16) arranged to receive a pipe (7) therein;
a radio-frequency identification RFID module (100) installed on the connector body;
a latch mechanism (30) positioned in an insertion position and movable into a latched position; and
a cover (50) attached to the latch mechanism (30) that extends over the RFID module (100) and prevents reading of the RFID module (100),
wherein responsive to the latch mechanism (30) being moved to the latched position the latch retains the pipe (7) to the connector body and moves the cover (50) to allow reading of the RFID module (100).

## Description

### CROSS-REFERENCE TO RELATED APPLICATION AND PRIORITY CLAIM

This application claims priority under 35 U.S.C. § 119(e) to U.S. Provisional Patent Application No. 63/736,813 filed on December 20, 2024. This provisional application is hereby incorporated by reference in its entirety.

### TECHNICAL FIELD

This disclosure is generally directed to fluid handling quick connectors. More specifically, it relates to a quick connector that verifies a properly latched connection between the quick connector and a mating fitting using latched confirmation information sent from a radio-frequency identification (RFID) module.

### BACKGROUND

Quick connectors are connector assemblies that allow for convenient, quick, fluid-tight connections between two or more pipes, tubes, or similar components. Quick connectors are commonly used in the automotive industry to connect tubing used in engine cooling line connections, fuel connections, fuel vapor connections or, more recently, when utilizing semi-rigid plastic tube in cooling circuits used to manage the temperature of batteries in electric or hybrid vehicles. Quick connectors typically include a female connector for receiving a male connector, or a male connector for receiving a female fitting or connector. In operation, when fully disposed within the female connector, the male connector is latched in position allowing for leak-free fluid communication between a first pipe in fluid communication with the female connector and a second pipe in fluid communication with the male connector. Unfortunately, many conventional quick connectors suffer from numerous drawbacks associated with locking together the components that are not fully connected or not latched in position, resulting in failed connections and leaks.

It would be desirable to use an RFID method to verify a latched connection between a quick connector and an installed pipe or similar component.

It would be desirable to provide an RFID method to ascertain that all quick connectors being used in the assembly of an apparatus that uses a plurality of quick connectors have all been properly latched upon the completion of the assembly.

### SUMMARY

This disclosure relates to a quick connector that verifies a latched connection between a quick connector and a pipe using latched confirmation information sent from an RFID module.

In a first embodiment, a connector is disclosed comprising a connector body surrounding an internal passage arranged to receive a pipe within the passage. A radio-frequency identification (RFID) module is installed on the connector body, and a latch mechanism is positioned in an insertion position, arranged to be movable into a latched position. A cover attached to the latch mechanism extends over the RFID module and prevents reading of the RFID module. Moving the latch mechanism to a latched position retains the pipe to the connector body and moves the cover to allow reading of the RFID module.

In a second embodiment, a connector is disclosed having a connector body and a receiving portion surrounding an internal passage, the internal passage arranged to receive a pipe therein. A latch mechanism has at least a first leg retained in the receiving portion positioned in an insertion position, wherein the latch mechanism and the first leg are movable into a latched position. A radio-frequency identification (RFID) module installed on the first leg is shielded by a radio frequency (RF) blocking member that prevents reading of the RFID module. Moving the latch mechanism to the latched position retains the pipe to the connector body and causes the first leg to move and unshield the RFID module allowing the reading of the RFID module.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 is an exploded perspective view showing an exemplary quick connector used in practicing the present disclosure.
FIG.2 is a schematic representation of an exemplary RFID module and RFID reader used in practicing the present disclosure.
FIG. 3 side elevational view of the quick connecter having a latch mechanism in a pipe insertion position in accordance with a first embodiment of the present disclosure.
FIG. 4 is a side elevational view of the quick connector of FIG.2 having the latch mechanism in a latched position in accordance with the first embodiment of the present disclosure.
FIG. 5 is a side elevational view showing the quick connector having a latch mechanism in a pipe insertion position in accordance with a second embodiment of the present disclosure.
FIG. 6 is a side elevational view showing the quick connector of FIG. 5 having the latch mechanism in a latched position in accordance with the second embodiment of the present disclosure.

### DETAILED DESCRIPTION

The figures discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

In an embodiment of the present disclosure, the quick connector is a device of the type commonly used in the automotive industry to connect tubing used in engine cooling line connections, fuel connections, fuel vapor connections or the like. The quick connector includes a connector body and a slidable latch mechanism. The connector body includes an internal passage centrally located in the connector body adapted so that a pipe can be inserted into the passage. The latch mechanism is located on the connector body and is slidable from a pipe insertion position that facilitates the insertion of the pipe into the connector body internal passage, to a latch position that captures and locks the pipe within the connector body.

The quick connector described above includes a verification method using a single-frequency radio-frequency identification (RFID) module that employes a passive RFID module or smart label, an antenna, and an RFID reader or interrogator. Passive RFID modules contain an integrated circuit and an antenna but do not have a power supply, such as for example a battery. The RFID module relies on electromagnetic field energy from a radio frequency (RF) transmitted by the RFID reader's antenna to harvest RF energy to power the integrated circuit utilizing the antenna located within the passive RFID module. As used herein, the harvesting of RF energy refers to a process of extracting and capturing electrical energy from the RFID reader. In this embodiment, the RF electromagnetic field produced by the RFID reader is captured by a tuned coil within the RFID chip of an RFID module collected by an antenna tuned to the frequency of the RF electromagnetic field.

The single-frequency RFID module described has preloaded information programmed in the module. The RFID module is also arranged to transmit its information to the RFID reader when the RFID reader is placed near the RFID module. For example, the RFID module may include latched confirmation information that is transmitted to the RFID reader when the RFID module is powered on by the RF energy from the reader.

In certain other embodiments a plurality of quick connectors may be used in an assembly of an apparatus or device, such as for example a vehicle engine. In such assemblies, the information programmed and stored in the RFID module may include an identifier code that identifies a particular one quick connector used in the engine assembly. In such an embodiment, the assembled engine is interrogated after completion of the assembly. Each quick connector used in the assembled engine transmitting its identifier code and its latched confirmation information to the RFID reader.

In an embodiment, the quick connector may include an RFID module that is fixed to the quick connector body and an RF blocking cover integrally attached to the quick connector latch mechanism that covers the RFID module and its antenna when the latch mechanism is in an unlatched position, thereby blocking the reception of RF energy by the RFID module. Sliding the latch mechanism to the latched position captures the pipe installed in the connector body and causes the RF blocking cover to move and uncover the RFID antenna and module. Uncovering the RFID module exposes the RFID module to the RF energy from the RF reader, powering-up the module and sending its stored identifier and verification code to the RFID reader.

In another embodiment, the RFID antenna and module may be located and placed on the latch mechanism of the quick connector behind a fixed RF blocking wall that is integrally built into the connector body. When the latch is in the unlatched position the RF module is located behind the RF blocking wall and is prevented from receiving RF energy from the RFID reader. Moving the latch mechanism to the latched position captures the pipe installed in the connector body and moves the RFID module and antenna away from the RF blocking wall, exposing the module to the RF energy from the RFID reader.

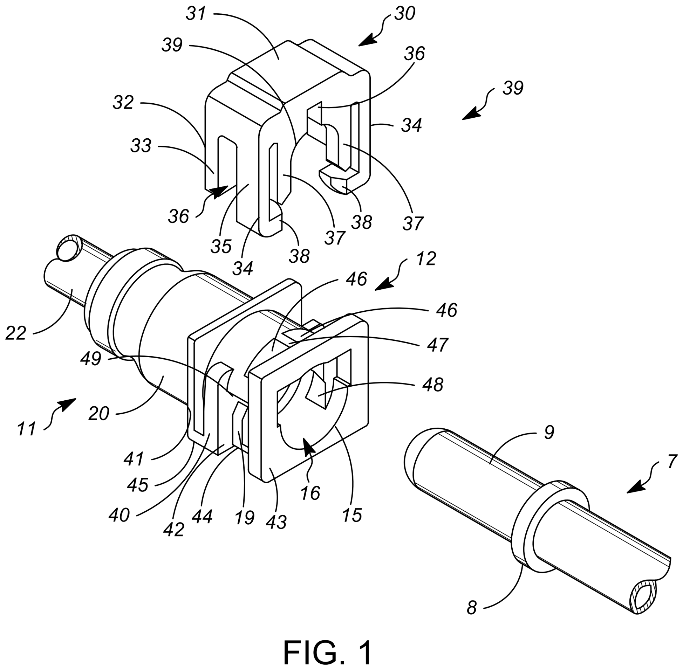

Turning now to FIG. 1, an exemplary quick connector is illustrated that can be used to practice the present disclosure. The quick connector includes connector body 11, a pipe 7 and a latch mechanism 30. The pipe 7 is arranged to be installed into connector body 11 and may be made of, for example, of metal or a plastic material, formed in a substantially round pipe shape. Flange portion 8 forms a bulge portion that projects annularly from the outer peripheral surface of pipe 7 spaced a predetermined distance from the frontal end portion 9 of the pipe 7. The pipe 7 may also be an end form formed on an end of a pipe or could be, for example, a fitting that may be attached to pipe 7 by any convenient means, such as by soldering, laser welding or the like.

As shown in FIG. 1, the connector body 11 is made of, for example, a resin plastic and is formed in a substantially cylindrical shape. One end of the connector body 11 includes pipe receiving part 12 arranged to accept pipe 7 into an opening 15. The other end of the connector body 11, includes a coupling end 20 used to couple the connector body 11 to another device. The coupling end 20 may include a male stem 22 that mates with a receptacle of the other device. The male stem 22 may also include one or more barbed flanges (not shown) that may accept over the barbed flanges a synthetic resin pipe making a fluid coupling to connector body 11. Fluid from pipe 7 can pass from pipe 7 into an internal passage, partially shown by passage 16 in the connector body 11 and through the male stem 22 of the coupling end 20 or vice-versa.

An internal passage 16 is formed in the interior of connector body 11 that includes annular interior walls shaped to accept the frontal end portion 9 and pipe bulge 8 of the pipe 7. One or more O-rings (not shown) may be installed in internal passage 16 to provide a tight liquid seal between the pipe 7 and connector body 11. First and third flange members 41 and 43 are arranged on the outer peripheral surface of the pipe receiving part 12 in parallel to each other on either end of receiving part 12. Each of the first and third flange members 41 and 43 is formed in a substantially square shape having upper, lower, left and right-side edges. A second flange member 42 is formed to expose the upper part of the pipe receiving part 12. A flat lower surface 44 extends between the second flange 42 and the third flange 43 horizontally along the tangential direction of the lower end surface. The flat lower surface 44 is slightly recessed from the lower edges of the first and second flange members 42 and 43.

Plate portion 45 extends horizontally in the left-right direction along the tangential direction of the lower end surface of the pipe receiving part 12 between first flange member 41 and second flange member 42. The left and right end portions of the lower plate portion 45 are aligned flush with both side edges of both flange members 41 and 42. A pair of left and right insertion holes 46 are located in a front half portion of pipe receiving part 12 between the third flange member 43 and the second flange member 42. As shown in FIG. 1, a pair of receiving holes 48 corresponds to the two insertion holes 46 and are formed symmetrically in the lower half of the pipe receiving part 12. Recesses 49 are formed in the upper half portions of both receiving holes 48, respectively.

The latch mechanism 30 may be made of metal or a resin plastic material and has a top portion 31, left and right guide legs 32, left and right latching legs 34, and left and right pipe retaining pieces 37. The top portion 31 is formed in a substantially flat plate shape and sized to fit between the first flange member 41 and the third flange member 43 to be fitted into the pipe receiving part 12 from above. The left and right guide legs 32 are formed in a long and narrow plate shape having a flat front surface 33 extending symmetrically and downward from both left and right ends of the rear half of the top portion 31. The two guide legs 32 are slidably engaged from above between the first flange member 41 and the second flange member 42 in the pipe receiving part 12. The left and right latching legs 34 are formed in left and right symmetrical shapes from the left and right ends of the front half of top portion 31, respectively, and are formed in elongated thin plate shapes having a flat front surface 35 extending downward from top portion 31. The two latching legs 34 are slidably engaged from the upper side to the lower side between the second flange member 42 and the third flange member 43 of the pipe receiving part 12. The second flange member 42, further includes a flat front face 40 positioned in the gap between the latching leg 34 and the guide leg 32.

Latching legs 34 are formed to be elastically deformable, that is, flexibly deformed in the direction in which the lower ends are expanded. Square plate-shaped latch projections 38 protrude from the lower ends of both latching legs 34 to face each other. The two latch projections 38 are engaged with the upper ends of the respective receiving holes 48 of the pipe receiving part 12 by utilizing the elastic deformation of the respective latching legs 34 to enter the recesses 48. In this state, the distal ends of the two latch projections 38 protrude into the pipe connection part 12 retaining latch mechanism 30 to the pipe receiving part 12 in a "pipe insertion position".

When the latch mechanism 30 is attached to the connector body 11 in the pipe insertion position, the two latch projections 38 slide along the outer peripheral surface of the pipe connection part 11 while the two latching legs 34 are elastically deformed outward of the complementary outer peripheral surfaces of the pipe receiving part 12. The elastically deformed latching legs 34 are elastically restored by extending under concave portions 49 and into receiving holes 48, engaging the two latching projections 38 into both receiving holes 48. In the insertion position, the movement of the latch mechanism 30 is restricted by the two latch projections 38 facing the upper and lower surfaces of the concave portion 49 of receiving holes 48.

As shown in FIG. 1, the left and right retaining pieces 37 are formed in a long thin symmetrical left and right plate shape that extend downward from the front end of the top portion 31. A locking groove 39 is formed between the two retaining pieces 37 to form an inverted U shape and to receive the pipe 7 in the radial direction. Both retaining pieces 37 are inserted into the two insertion holes 26 of the pipe connection part 12 from above. When the retainer 30 is in the pipe insertion position, both retaining pieces 37 are only partially installed in insertion holes 26. An interruption slot 36 is formed between the upper ends of both retaining pieces 37. The interruption slot 36 is formed to be able to receive a partition 47 located between the two insertion holes 46.

The quick connector described above is used as follows. With the latch mechanism 30 in the pipe insertion position, pipe 7 is inserted into the pipe receiving part 12 through opening 15. The pipe 7 is inserted into internal passage 16 until flange 8 meets a front face formed in the internal passage. The front-end portion 9 extends into internal passage 16 within coupling end 20. Rubber O-rings mounted within internal passage 16 contact an outer surface of the front-end portion 9 of the pipe 7 that are elastically deformed by the front-end portion 9 of the pipe 7 to provide a liquid tight seal between pipe 7 and the connector body 11.

When the top portion 31 of the latch mechanism 30 is pushed downward, the latch mechanism 30 is disengaged from the pipe insertion position. The latching projections 35 of the two latching legs 34 disengage from receiving holes 48 and slide down along the inclined surfaces 19 to descend and finally pass through the flat lower surface 44. Once beyond the lower surface 44 latching legs 34 regain their relaxed positions. Any upward movement of the latch mechanism 30 is prevented by the engagement of the two latching projections 35 against the bottom of flat lower surface 44. At the same time, the interrupt slot 36 of the latch mechanism 30 engages with partition 47 of the pipe receiving part 12. With slot 36 engaged against partition 47, downward movement of the latch mechanism 30 is stopped positioning the latch mechanism 30 is in its "latched position" retaining the pipe 7 to receiving part 12.

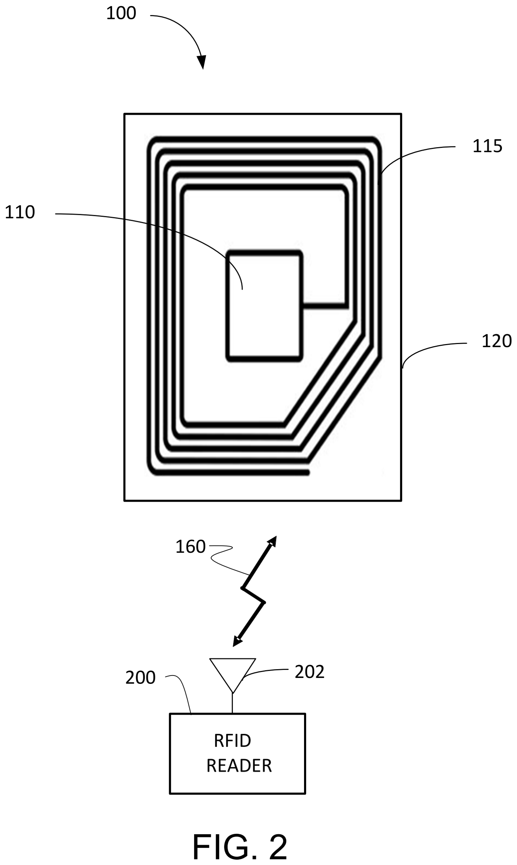

FIG. 2 illustrates an exemplary RFID module 100 and RFID reader 200. The RFID module 100 includes three components, a passive RFID chip, or integrated circuit (IC) 110 an antenna 115 and a substrate 120. The RFID chip 110 is an electronic circuit microchip that includes a logic unit that makes decisions and provides memory to store data. Energy to power a passive RFID chip 110 is obtained from the radio energy radiated by a RFID reader 200 antenna. Processing logic contained on the RFID chip 110 implements a communication protocol, modulates/demodulates RF signals and encodes/decodes digital bits during the communication between the RFID reader 200 and the RFID chip 110. The memory on RFID chip 100 may use electrically erasable, programmable, read-only memory (EEPROM). This type of memory does not require continuous power to store data and can be retained for a long period (several years), even though no power may be available to the module during this period. The type of data stored in the memory depends on the protocol used. The RFID chip 110 may store information such as a module ID, location information, verification information, password, and an error detection code such as cyclic redundancy code (CRC).

The antenna 115 is the largest part of the RFID module 100 and is communicatively connected to the passive RFID chip 110. The antenna 115 collects the RF energy and signals from the RFID reader 200. The RFID module antenna 115 collects power from the RF frequency used by RFID reader 200 and supplies it to the passive RFID chip 110. The geometry of antenna 115 is determined by the frequency at which the module operates. The antenna can be shaped as a spiral coil, a single dipole, dual dipoles (one perpendicular to another), or a folded dipole. The antenna is designed for a specific frequency of operation. Antennas are usually made of thin metal strips of copper, aluminum, or silver.

The substrate 120 holds the RFID module 100 components together. Antenna 120 is deposited or printed on the substrate 120, and the RFID chip 110 electrically connected using conductive elements to the antenna 120. A substrate is usually made from flexible material such as thin plastic, but it may also be made from rigid material. Most passive RFID modules use substrates made from flexible material with a thickness of 100 to 200 nm. Some of the materials used for the substrate 120 are polymer, PVC, Polyethyleneterephthalate (PET), phenolics, polyesters, styrene. One side of the substrate is usually coated with an adhesive material to attach the RFID module 100 to an object. A protective overlay made from materials such as PVC lamination, epoxy resin, or adhesive paper may be added to protect the RFID module 100 from environmental effects. Additionally, a back side of the RFID module 100 or the substrate 120 may include a layer of RF blocking material, such as for example, carbon fiber, metallic materials (coatings, foils, fibers, particles made from metals such as, aluminum, copper, iron, nickel or other metals or alloys) to prevent RF energy from RFID reader 200 activating the RFID module 100 from the back side of the module 100.

RFID module 100 communicates with an actively powered RFID reader 200 via an antenna 202 and a wireless RFID protocol 160. The RFID reader 200 may be a portable computing device or a handheld mobile scanner designed for interrogating and communicating with RFID modules. The RFID reader may also be a portable communication device that can execute software applications. The communication device designed to interrogate RFID modules when the software application is executed, such as for example, a data pad, a smartphone, or a wearable smart wristwatch. The RFID reader 200 is designed to transmit and receive RFID protocol 160 transmissions using the RF frequency used by the RFID module, i.e. a UHF frequency, for example 915 MHz or an HF frequency 13.56 MHz The RFID module 100 works in cooperation with the RFID reader 200 to send the information stored by the RFID module 100 to the RFID reader 200.

The RFID reader 200 transmits interrogation signals via the wireless RFID protocol 160 using its antenna 202. When the RFID reader 200 is placed in proximity to antenna 115, the RF interrogation signals from antenna 202 are received by antenna 115 and passed to the RFID chip 110. The RF energy from the interrogation signals is harvested and converted to electrical energy and used by the RFID chip 110 to power-up. Upon power-up, the RFID chip 110 sends an authentication response back to the RFID reader 200 via antennas 115 to antenna 202 using RFID protocol 160. Upon receiving the authentication response, the RFID reader 200 switches to a reception mode to receive the information from the RFID module 100. The RFID reader 200 can temporarily store the received information for further processing. Removing the RFID reader 200 from the vicinity of antenna 115 powers-down the RFID chip 110 which ceases transmissions.

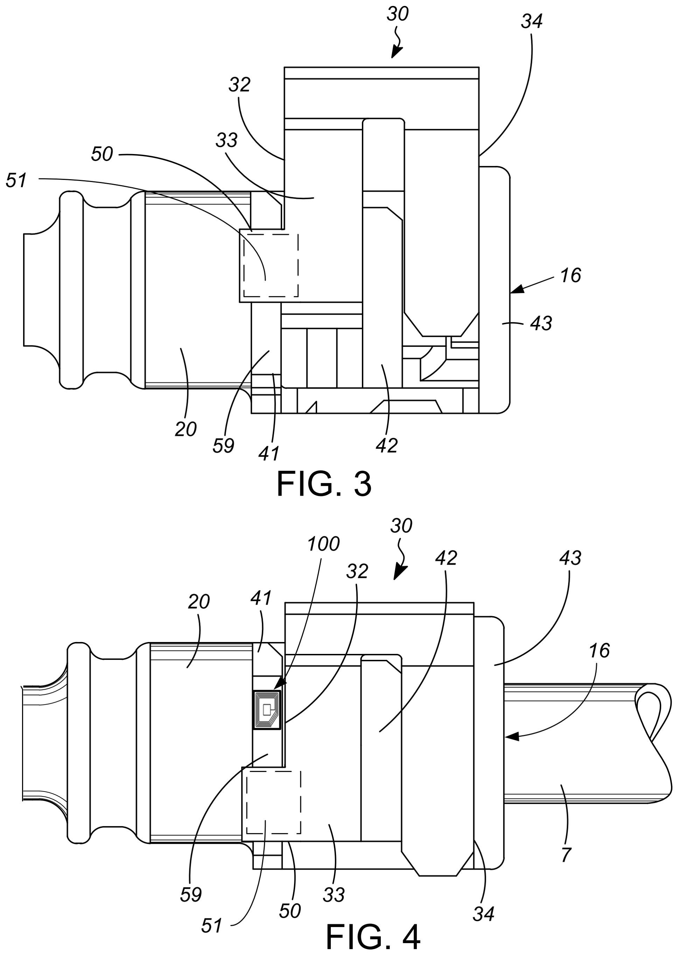

Turning now to FIGS. 3 and 4, an exemplary first embodiment of the present disclosure is illustrated. The RFID module 100 in this first embodiment is attached to edge surface 59 of the first flange member 41, as shown in FIG. 4. In other embodiments the RFID module 100 may be attached to the surface of coupling end 20. Guide leg 32 of latch mechanism 30 includes a cover member 50 that extends perpendicularly from guide leg 32 surface 33. Cover member 50 is formed as a planar plate fixed to and extending from surface 33 of guide leg 32. Cover 50 is attached near a bottom portion of guide leg 32 and is arranged to extend over a first portion of edge surface 59 of first flange member 41 when the latch mechanism 30 is in the pipe insertion position as shown in FIG. 3. In other embodiments the cover may extend perpendicularly from guide leg 32 surface 33 beyond edge surface 59 of flange member 41 to extend over the RFID module 100 attached to the surface of coupling end 20. The cover 50 is arranged to move with guide leg 32 when latch mechanism 30 is moved from the pipe insertion position to the latched position. Cover member 50 may include RF blocking material 51 applied to a surface of the cover member, preferably the inner surface facing the edge surface 59. The RF blocking material 51 can be comprised of RF reflecting materials, such as carbon fiber, metallic materials (coatings, foils, fibers, particles made from metals such as, aluminum, copper, iron, nickel or other metals or alloys) or Faraday cloth shields applied in one or more layers on either the upper or lower surface of the cover member 50, or, to both surfaces. The RF blocking material 51 may be applied using a suitable adhesive or any other method known for depositing material on a surface, such as sputter deposition or by printing. In certain other embodiments the RF blocking material may be introduced into the material comprising the cover member 50 during the molding of the latch mechanism 30.

As shown in FIG. 3, the latch mechanism 30 in the pipe insertion position, allows the axial insertion of the pipe 7 into connector body 12 through passage 16. In the pipe insertion position cover member 50 is located over edge surface 59 positioning the cover member 50 over the RFID module 100 in close proximity to the blocking material 51, thereby blocking the RFID module from receiving the RF frequencies from RFID reader 200. The RF blocking material 51 reflecting the RF energy away from the member 50 and preventing the RF energy from reaching the RFID module 100.

Upon insertion of pipe 7 into the connector body 12 the latch mechanism 30 can be manually moved into the latch position by moving the latch mechanism in a transverse direction to the direction of the insertion of pipe 7. The transverse movement to the latch position slides the guide leg 32 and cover member 50 away from the RFID module 100. In the latched position pipe 7 is locked to the connector body, and cover member 50 is moved to a second portion of edge surface 59 as shown in FIG. 4 uncovering the RFID module 100. The RFID module can now be interrogated and activated by the RFID reader 200 to verify the latching of the pipe 7 to the connector body and transmit its stored information to the RFID reader 200 using the RFID protocol 160.

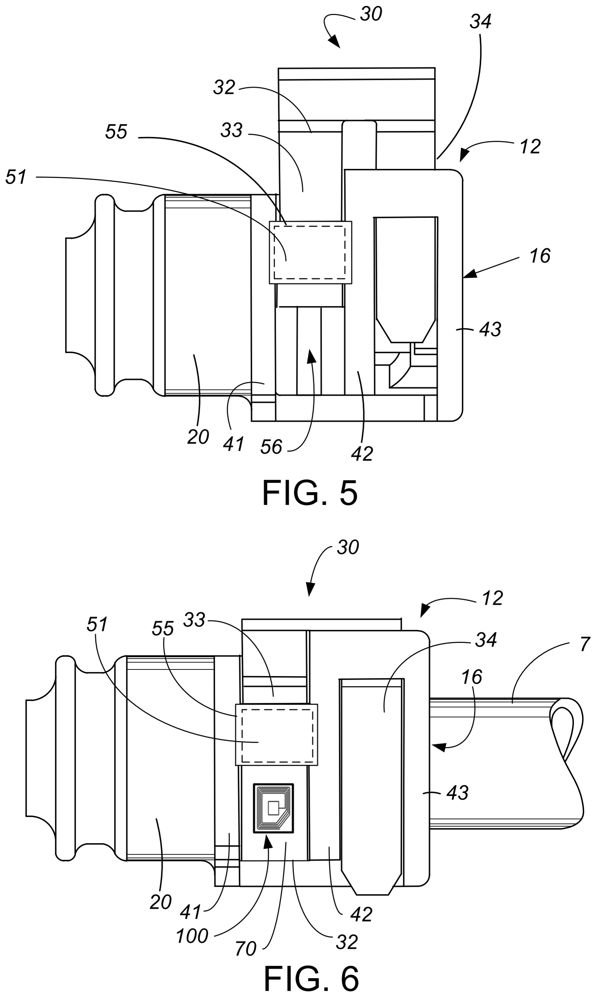

FIGS. 5 and 6 illustrate an exemplary second embodiment of the present disclosure. Latch mechanism 30 is installed on the connector body 12 in the pipe insertion position. In the pipe insertion position the pipe 7 may be installed into connector body 12 through passage 16. A cross-member 55 is attached between first flange member 41 and second flange member 42. The cross-member 55 forms a non-movable planar wall over a portion of channel 56 between flange members 41 and 42. The cross-member 55 includes RF blocking material 51 applied to either a lower or upper surface or both lower and upper surfaces of the cross-member 55. The RF blocking material 51 being the same as used with cover member 50 in FIGS 3 and 4. Additionally, the RF blocking material 51 can be introduced into the material comprising the cross-member 55 during the molding of the connector body 12.

In this second embodiment, the RFID tag 100 is attached to surface 33 of one of the guide legs 32 of latch mechanism 30, for example the left leg 32 as seen in FIG. 5. When the latch mechanism 30 is positioned in the pipe insertion position, the RFID module 100 is located behind cross-member 55, in close proximity to the RF blocking material 51 deposited on the lower surface of the cross-member 55 preventing the RFID module 100 from receiving the RF frequencies from RFID reader 200, as explained in FIGS 3 and 4.

Upon insertion of pipe 7 into the connector body 12 the latch mechanism 30 can be manually moved into the latch position by moving the latch mechanism in a transverse direction to the direction of the insertion of pipe 7. As shown in FIG. 6, moving the latch mechanism 30 transversely into the latch position slides the guide leg 32 away from cross-member 55, into an opening 70. In the latched position, the RFID module 100 becomes uncovered and can now be interrogated and activated to verify the latching of the pipe 7 to the connector body and transmission of its stored information to the RFID reader 200 using the RFID protocol 160.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," or "controller" within a claim is understood and intended to refer to structures known to those skilled in the relevant art, as further modified or enhanced by the features of the claims themselves and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

The present application also discloses the following numbered embodiments:

### Numbered embodiment 1

A connector comprising:
a connector body surrounding an internal passage arranged to receive a pipe therein;
a radio-frequency identification (RFID) module installed on the connector body;
a latch mechanism positioned in an insertion position and movable into a latched position; and
a cover attached to the latch mechanism extends over the RFID module and prevents reading of the RFID module,
wherein responsive to the latch mechanism being moved to the latched position the latch retains the pipe to the connector body and moves the cover to allow reading of the RFID module.

### Numbered embodiment 2

The connector of numbered embodiment 1, wherein the connector body includes first and second flanges surrounding the internal passage and defining a receiving portion, wherein an opening located between the first and second flanges extends into the receiving portion and receives a first leg of the latch mechanism.

### Numbered embodiment 3

The connector of numbered embodiment 2, wherein the cover is integrally joined to the first leg of the latch mechanism and extends perpendicularly from the first leg to cover the RFID module in the insertion position and uncover the RFID module when the latch mechanism is moved to the latched position.

### Numbered embodiment 4

The connector of numbered embodiment 2, wherein the first flange including a planar edge surface having the RFID module applied to a first portion of edge surface, wherein the cover travels along the first flange edge surface from the first portion to a second portion of the edge surface when the latch mechanism is moved from the pipe insertion position to the latched position.

### Numbered embodiment 5

The connector of numbered embodiment 4, wherein the cover is integrally joined to the first leg and extends perpendicularly from the first leg over the flange edge surface.

### Numbered embodiment 6

The connector of numbered embodiment 1, wherein the cover includes an upper and lower surface, each surface arranged to have radio frequency (RF) blocking material applied to either the upper or the lower surface that reflects RF energy.

### Numbered embodiment 7

The connector of numbered embodiment 6, wherein the RF blocking material is applied to both the upper and the lower surface of the cover.

### Numbered embodiment 8

The connector of numbered embodiment 6, wherein the RF blocking material is molded into the material comprising the cover.

### Numbered embodiment 9

The connector of numbered embodiment 3 wherein the RFID module is comprised of an RFID chip and an antenna mounted to a substrate, wherein the substrate is attached to the connector body.

### Numbered embodiment 10

The connector of numbered embodiment 9 wherein the RFID module substrate is attached to the first portion of the first flange edge surface.

### Numbered embodiment 11

The connector of numbered embodiment 9, wherein the RFID chip stores latched confirmation information that includes at least an RFID module ID and latched verification data.

### Numbered embodiment 12

The connector of numbered embodiment 11, wherein the RFID module transmits the latched confirmation information to an RFID reader device using an RFID protocol when uncovered by the cover.

### Numbered embodiment 13

The connector of numbered embodiment 12, wherein the RFID reader is a portable computing device, or a handheld mobile scanner designed for interrogating and communicating with RFID modules using the RFID protocol.

### Numbered embodiment 14

The connector of numbered embodiment 12, wherein the RFID reader is a portable mobile device including a data pad, a smartphone, or a wearable smart wristwatch that are arranged to execute a software application that when executed is designed to interrogate the RFID module using the RFID protocol.

### Numbered embodiment 15

A connector comprising:
a connector body having a receiving portion surrounding an internal passage, the internal passage arranged to receive a pipe therein;
a latch mechanism having a first leg retained in the receiving portion in an insertion position, the latch mechanism and the first leg movable into a latched position; and
a radio-frequency identification (RFID) module installed on the first leg, the RFID module shielded by a radio frequency (RF) blocking member in the insertion position preventing the reading of the RFID module,
wherein responsive to the latch mechanism being moved to the latched position the latch retains the pipe to the connector body and causing and first leg to move and unshield the RFID module allowing the reading of the RFID module.

### Numbered embodiment 16

The connector of numbered embodiment 15, wherein the connector body includes first and second flanges the first and second flanges defining the receiving portion, and an opening located between the first and second flanges extending into the receiving portion for receiving the latch mechanism first leg.

### Numbered embodiment 17

The connector of numbered embodiment 16, wherein the RF blocking member is a cross-member that extends between the first and second flanges, wherein in the pipe insertion position the RFID module is located behind and shielded by the RF blocking member.

### Numbered embodiment 18

The connector of numbered embodiment 17, wherein in the latched position the RFID module is moved from behind the RF blocking member.

### Numbered embodiment 19

The connector of numbered embodiment 18, wherein the RF blocking member has at least either an upper or a lower surface covered by RF blocking material.

### Numbered embodiment 20

A method for confirming the latching of a pipe to a connector body using a radio-frequency identification (RFID) module, the method comprising:
providing a latch mechanism movable between a first position that allows insertion of the pipe into the connector body to a second position that latches the pipe to the connector;
preventing the RFID module from receiving radio frequency (RF) energy from an RF reader when the latch mechanism is in the first position, and
moving the latch mechanism to a second position when the pipe is inserted into the connector body allowing the RFID module to receive RF energy from the RF reader activating the RFID module to transmit latched confirmation information to the RF reader.

## Claims

1. A connector comprising:
a connector body surrounding an internal passage arranged to receive a pipe therein;
a radio-frequency identification (RFID) module installed on the connector body;
a latch mechanism positioned in an insertion position and movable into a latched position; and
a cover attached to the latch mechanism that extends over the RFID module and prevents reading of the RFID module,
wherein responsive to the latch mechanism being moved to the latched position the latch retains the pipe to the connector body and moves the cover to allow reading of the RFID module.

2. The connector of claim 1, wherein the connector body includes first and second flanges surrounding the internal passage and defining a receiving portion, wherein an opening located between the first and second flanges extends into the receiving portion and receives a first leg of the latch mechanism.

3. The connector of any preceding claim, wherein the cover is integrally joined to the first leg of the latch mechanism and extends perpendicularly from the first leg to cover the RFID module in the insertion position and uncover the RFID module when the latch mechanism is moved to the latched position.

4. The connector of claim 2, wherein the first flange including a planar edge surface having the RFID module applied to a first portion of edge surface, wherein the cover travels along the first flange edge surface from the first portion to a second portion of the edge surface when the latch mechanism is moved from the pipe insertion position to the latched position.

5. The connector of claim 4, wherein the cover is integrally joined to the first leg and extends perpendicularly from the first leg over the flange edge surface.

6. The connector of claim 1, wherein the cover includes an upper and lower surface, each surface arranged to have radio frequency (RF) blocking material applied to either the upper or the lower surface that reflects RF energy or to both the upper and the lower surface of the cover.

7. The connector of claim 6, wherein the RF blocking material is molded into the material comprising the cover.

8. The connector of claim 3 wherein the RFID module is comprised of an RFID chip and an antenna mounted to a RFID module substrate, wherein the RFID module substrate is attached to the connector body.

9. The connector of claim 8 wherein the RFID module substrate is attached to the first portion of the first flange edge surface.

10. A connector comprising:
a connector body having a receiving portion surrounding an internal passage, the internal passage arranged to receive a pipe therein;
a latch mechanism having a first leg retained in the receiving portion in an insertion position, the latch mechanism and the first leg movable into a latched position; and
a radio-frequency identification (RFID) module installed on the first leg, the RFID module covered by a radio frequency (RF) blocking member in the insertion position preventing the reading of the RFID module,
wherein responsive to the latch mechanism being moved to the latched position the latch retains the pipe to the connector body and causing and first leg to move and uncover the RFID module allowing the reading of the RFID module.

11. The connector of claim 10, wherein the connector body includes first and second flanges the first and second flanges defining the receiving portion, and an opening located between the first and second flanges extending into the receiving portion for receiving the latch mechanism first leg.

12. The connector of claim 11, wherein the RF blocking member is a cross-member that extends between the first and second flanges, wherein in the pipe insertion position the RFID module is located behind and shielded by the RF blocking member.

13. The connector of claim 12, wherein in the latched position the RFID module is moved from behind the RF blocking member.

14. The connector of claim 10, wherein the RF blocking member has at least either an upper or a lower surface covered by RF blocking material or both the upper and lower surface covered by the RF blocking material.

15. The connector of any preceding claim 10, wherein the RFID module stores latched confirmation information that includes at least an RFID module ID and latched verification data and wherein the RFID module transmits the latched confirmation information to an RFID reader device using an RFID protocol when the RFID module is uncovered.
